# EUROPÄISCHE PATENTANMELDUNG

(11) **EP 3 546 840 A2**
(43) Veröffentlichungstag der Anmeldung: **02.10.2019**
(21) Anmeldenummer: 19166081.0
(22) Anmeldetag: 29.03.2019
(51) Int. Cl.: F24D 19/10, F04D 15/00, G01F 1/05

(54) **WARMWASSERBEREITER**

(30) Priorität: 30.03.2018 TR 201804464
(71) Anmelder: Bosch Termoteknik Isitma ve Klima Sanayi Ticaret Anonim Sirketi, 45030 Manisa (TR)
(72) Erfinder: Pekguzelsu, Mustafa, 35030 Bayraki / Izmir (TR); Konuk, Gokhan, 35030 Bornova/Izmir (TR); Erdogan, Hasan Cosan, 35100 Bornova/Izmir (TR)
(74) Vertreter: Bee, Joachim

(57) **Zusammenfassung**

Die Erfindung umfasst einen Warmwasserbereiter (1), der ein Wasservolumen (10) enthält, das so konfiguriert ist, dass es über eine zentrale Heizleitung (12) mit mindestens einem Heizkörper (30) in hydraulischer Verbindung steht; eine Wärmequelle (16) zum Erwärmen von Wasser in dem Wasservolumen (10);
eine Pumpe (14) mit einem Flügelrad zum Abpumpen vom Wasser im Wasservolumen (10) aus der zentralen Heizleitung (12) und eine Steuervorrichtung (20), die zum Steuern der Pumpe (14) konfiguriert ist. Die Erfindung ist dadurch gekennzeichnet, dass sie einen der Pumpe (14) zugeordneten Encoder umfasst, der ein Signal für die Anzahl der Umdrehungen pro Minute des Flügelrads erzeugt; wobei die Steuervorrichtung (20) konfiguriert ist, das Signal zu lesen und einen Durchflussschätzwert des durch die zentrale Heizleitung (12) fließenden Wassers gemäß dem Signal zu erzeugen.

## Beschreibung

### TECHNISCHES GEBIET

Die Erfindung bezieht sich auf Warmwasserbereiter und insbesondere auf einen Warmwasserbereiter für den im Stand der Technik angegebenen Teil von Anspruch 1.

### VORHERIGER STAND DER TECHNIK

Die Warmwasserbereiter beheizen das Wasser in einer Zentralheizungsleitung und gewährleisten mittels einer Pumpe den Wasserkreislauf zwischen den Zentralheizungskomponenten und einer Pumpe.

Beim hydraulischen oder hydronischen Abgleich handelt es sich um den Prozess der Optimierung der Wasserverteilung in der hydraulischen Heizungsanlage eines Gebäudes, indem der Druck des Systems ausgeglichen wird. Dies gewährleistet optimale Energieeffizienz und minimale Betriebskosten für ein optimales Raumklima.

Der hydraulische Abgleich kann während der Installation erfolgen. Die Wasserdurchflussmenge des durch die Zentralheizungsleitung strömenden Wassers wird unter Berücksichtigung der Anzahl und Abmessungen der Komponenten der Zentralheizung (Netwerk), wie z. B. des Heizkörpers, sowie der Größe der zu beheizenden Räume angepasst. Im Stand der Technik können Durchflussmessgeräte (Turbinen), die sich um das Heizgerät herum befinden, zum Messen der Durchflussmenge verwendet werden. Turbinen erhöhen sowohl die Anfangskosten als auch die Wartungskosten und ermöglichen die Messung der Durchflussmengen nur an bestimmten Punkten. Während des hydraulischen Abgleichs muss sich der Benutzer zwischen dem Ort, an dem der Durchfluss gemessen wird, und dem Ventil bewegen, an dem der Durchfluss aufgrund der Durchflussmenge erhöht oder verringert wird, was den Vorgang des hydraulischen Abgleichs erschwert.

Der Antrag mit Nummer EP2085707A2 beschreibt eine Heizvorrichtung und ein Verfahren zum hydraulischen Abgleich in einem Heizsystem, zu dem diese Heizvorrichtung gehört.

Der Antrag mit Nummer EP3034955A1 beschreibt ein hydraulisches Ausgleichsverfahren, bei dem die Wasserdurchflussmenge gemäß der Wassertemperatur bestimmt wird, das in die Heizvorrichtung eintritt und aus der Heizvorrichtung austritt.

Infolgedessen erforderten alle oben genannten Probleme Innovationen auf dem relevanten technischen Gebiet.

### KURZE BESCHREIBUNG DER ERFINDUNG

Die vorliegende Erfindung betrifft einen Warmwasserbereiter und ein Verfahren zum hydraulischen Abgleich, um die oben genannten Nachteile zu überwinden und dem betreffenden technischen Gebiet neue Vorteile zu bringen.

Ein Ziel der Erfindung ist es, eine Heizvorrichtung zum Bestimmen der Wasserdurchflussmenge aus der zentralen Heizleitung zum hydraulischen Abgleich bereitzustellen.

Ein weiteres Ziel der Erfindung ist es, eine Heizvorrichtung bereitzustellen, um die Wasserdurchflussmenge durch die zentrale Heizleitung zu erfassen und dabei eine reduzierte Anzahl von Komponenten zu verwenden.

Ein weiteres Ziel der Erfindung ist es, eine Heizvorrichtung und ein hydraulisches Ausgleichsverfahren bereitzustellen, bei denen der Benutzer während des hydraulischen Abgleichs nicht in der Nähe der Heizvorrichtung sein muss.

Um alle vorgenannten Ziele und alle Aufgaben zu realisieren, die sich aus der folgenden detaillierten Beschreibung ergeben, umfasst die vorliegende Erfindung ein Wasservolumen, das so konfiguriert ist, dass es in einer hydraulischen Verbindung mit mindestens einem Heizkörper über eine zentrale Heizleitung steht; eine Wärmequelle zum Erwärmen von Wasser in dem Wasservolumen; eine Pumpe mit einem Flügelrad zum Abpumpen des Wasservolumens aus der zentralen Heizleitung und einen Warmwasserbereiter mit einer Steuervorrichtung, die zum Steuern der Pumpe konfiguriert ist. Dementsprechend umfasst er einen der Pumpe zugeordneten Codierer, der ein Signal für die Anzahl der Umdrehungen pro Minute des Flügelrads erzeugt; wobei die Steuervorrichtung konfiguriert ist, das Signal zu lesen und einen Durchflussschätzwert des durch die zentrale Heizleitung fließenden Wassers gemäß dem Signal zu erzeugen. Somit können Daten über die Strömungsrate des durch die zentrale Heizleitung strömenden Wassers zur Verwendung beim hydraulischen Abgleich erhalten werden, ohne dass zusätzliche Ausrüstung außerhalb der Pumpe erforderlich ist.

In einer bevorzugten Ausführungsform der Erfindung ist der Codierer eine interne Komponente der Pumpe.

In einer anderen bevorzugten Ausführungsform der Erfindung ist das von dem Codierer erzeugte Signal ein Rechtecksignal.

In einer anderen bevorzugten Ausführungsform der Erfindung ist die Steuervorrichtung so konfiguriert, dass sie einen Wärmeausgabewert aus dem Durchflussschätzwert erhält.

In einer weiteren bevorzugten Ausführungsform der Erfindung ist die Steuervorrichtung so konfiguriert, dass sie mindestens den Durchflussschätzwert und/oder den Wärmeausgabewert in einer Benutzerschnittstelle anzeigt.

In einer weiteren bevorzugten Ausführungsform der Erfindung umfasst die Steuervorrichtung eine drahtlose Kommunikationsschnittstelle zum Übertragen von zumindest Durchflussschätzwert- und/oder Wärmeausgabewertinformatio nen an ein mobiles Endgerät. Dies bedeutet, dass der Benutzer nicht zur Mess- oder Schätzposition gehen muss, um die Werte zu lesen.

Bei der Erfindung handelt es sich auch um ein Wasservolumen, das so konfiguriert ist, dass es über eine zentrale Heizleitung mit mindestens einem Heizkörper in hydraulischer Verbindung steht; eine Wärmequelle zum Erwärmen von Wasser in dem Wasservolumen, eine Pumpe mit einem Flügelrad zum Pumpen von Wasser im Wasservolumen aus der zentralen Heizleitung; ein Verfahren zum hydraulischen Abgleichen eines Heizungssystems, das einen Warmwasserbereiter umfasst, der eine Steuervorrichtung umfasst, die zum Steuern der Pumpe konfiguriert ist. Dementsprechend umfasst die Innovation die folgenden Schritte, die von der Steuervorrichtung ausgeführt werden: Zugriff auf einen Speicher, in dem die Parameter von mindestens einem Heizkörper gespeichert sind; das Lesen eines von der Pumpe entnommenen Signals und Ausdrücken der Anzahl der Umdrehungen pro Minute des Flügelrads; Berechnen des Wertes der Wärmeabgabe von mindestens einem Heizkörper gemäß der Flügelraddrehzahl und den Parameterwerten der Heizkörper.

Eine weitere bevorzugte Ausführungsform der Erfindung ist ferner dadurch gekennzeichnet, dass der von der Steuervorrichtung berechnete Wärmeabgabewert in einer Benutzerschnittstelle angezeigt wird.

Eine weitere bevorzugte Ausführungsform der Erfindung ist dadurch gekennzeichnet, dass sie den Schritt zum Warnen des Benutzers umfasst, wenn die von der Steuervorrichtung berechnete Wärmeabgabe in einem vorbestimmten Umfang von einem vorbestimmten Wärmeabgabewert abweicht.

Eine weitere bevorzugte Ausführungsform der Erfindung ist dadurch gekennzeichnet, dass die Heizkörperparameter mindestens eine der Heizkörperabmessungen und die Anzahl der Heizkörper sind.

### KURZE BESCHREIBUNG DER FIGUR

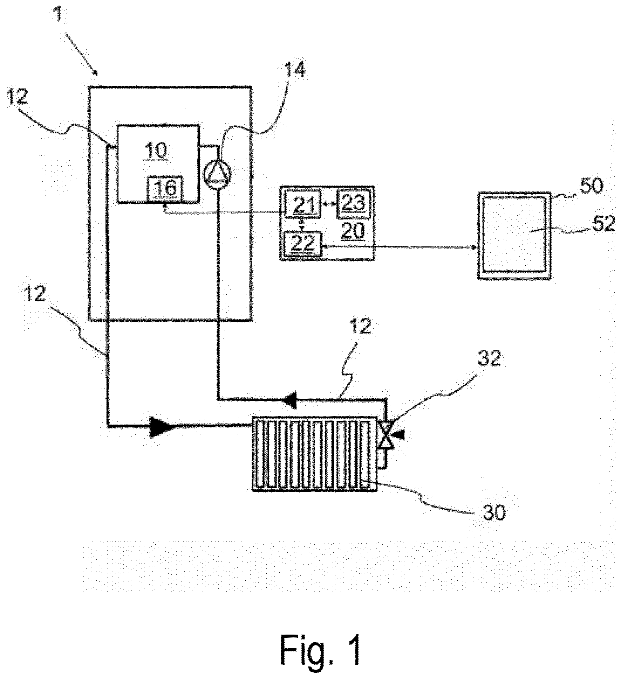

Fig. 1 stellt ein repräsentatives Bild eines Heizungssystems dar, in dem die erfindungsgemäße Heizung vorgesehen ist.

### DETAILLIERTE BESCHREIBUNG DER ERFINDUNG

In dieser detaillierten Beschreibung wird die erfindungsgemäße Heizvorrichtung durch Beispiele erläutert, die zum besseren Verständnis der Erfindung vorgesehen sind und nicht einschränkend wirken.

Mit Bezug auf Figur 1 ist der erfindungsgemäße Warmwasserbereiter (1) mit Zentralheizungskomponenten, wie etwa dem Heizkörper (30), durch eine zentrale Heizleitung (12) verbunden. Der Warmwasserbereiter (1) umfasst ein Wasservolumen (10). Das Wasservolumen (10) ist hydraulisch mit der zentralen Heizleitung (12) verbunden.

Eine Wärmequelle (16) sorgt für die Erwärmung des Wasservolumens (10). Das Wasservolumen (10) erlaubt den Durchtritt oder die vorübergehende Bevorratung des von der zentralen Heizleitung (12) kommenden Wassers.

Das Wasservolumen (10) bezieht sich in jeder möglichen Ausführungsform auf Rohre, die spiralförmig zugeführt werden. In einer anderen möglichen Ausführungsform kann das Wasservolumen (10) ein Wassertank mit einem Einlass und einem Auslass sein. Dementsprechend ist der Warmwasserbereiter (1) ein Heizer oder eine Heizvorrichtung, die sich einer Kombitherme ähnelt.

Die Wärmequelle (16) ist angeordnet, um mit Elektrizität oder mit brennbarem Gas betrieben zu werden.

Eine Pumpe (14) lässt Wasser durch das Wasservolumen (10) strömen, um durch die zentrale Heizleitung (12) zu fließen. In diesem Ausführungsbeispiel ist die Pumpe (14) in dem Bereich vorgesehen, in dem die zentrale Heizleitung (12) in das Wasservolumen (10) eintritt. Die Pumpe (14) kann Flügelräder umfassen, um das Wasser zu bewegen. Die Pumpe (14) ist auch mit einem Encoder verbunden. Dieser Encoder ermöglicht die Erzeugung des Signals im Hinblick auf die Drehzahl des Flügelrads. Der Encoder erzeugt das Signal in der Rechteckwellenform entsprechend der Drehzahl des Flügelrads. In einer möglichen Ausführungsform ist der Encoder in die Pumpe (14) integriert.

Eine Steuervorrichtung (20) steuert die Wärmequelle (16) und die Pumpe (14) . Die Steuervorrichtung (20) kann die Betriebsgeschwindigkeit der Pumpe (14) einstellen. In einer ausführlichen Beschreibung kann die Steuervorrichtung (20) eine Mikroprozessor-ähnliche Prozessoreinheit (21) umfassen. Die Steuervorrichtung (20) kann auch eine Speichereinheit (23) umfassen, die den Datenaustausch mit der Prozessoreinheit (21) verwaltet. Die Speichereinheit (23) ermöglicht dauerhafte oder vorübergehende Datenspeicherung.

Die Steuervorrichtung (20) umfasst auch eine Kommunikationsschnittstelle (22). Die Kommunikationsschnittstelle (22) ermöglicht es der Prozessoreinheit (21), entweder verkabelt oder drahtlos mit einem mobilen Endgerät (50) zu kommunizieren. Die Kommunikationsschnittstelle (22) ist konfiguriert, um in dieser beispielhaften Ausführungsform mit dem WLAN-Protokoll zu kommunizieren. In einer möglichen Ausführungsform kann sie so konfiguriert sein, dass sie mit einem der drahtlosen Kommunikationsprotokolle für kurze Distanzen kommuniziert, in einer drahtgebundenen Umgebung kommuniziert oder eine Verbindung zu einem Mobilfunknetz herstellt.

Das mobile Endgerät (50) ist konfiguriert, um Daten mit der Steuervorrichtung (20) auszutauschen. Das mobile Endgerät (50) umfasst eine Benutzerschnittstelle (52). Die Benutzerschnittstelle (52) ist ein Berührungsbildschirm. Das mobile Endgerät (50) kann ein Smartphone, ein Tablet-Computer, ein Laptop usw. sein.

An der zentralen Heizleitung (12) oder am Heizkörper (30) ist mindestens ein Ventil (32) vorgesehen. Das Ventil kann eine Änderung der Wasserdurchflussmenge des durch die zentrale Heizleitung (12) strömenden Wassers herbeiführen.

Die oben beschriebene Erfindung funktioniert auf folgende Weise: Die Pumpe (14) wird betrieben. Der der Pumpe (14) zugeordnete Encoder erzeugt ein Signal entsprechend der Drehzahl des Flügelrads. Die Prozessoreinheit (21) liest das von der Pumpe (14) erzeugte Signal. Die Prozessoreinheit (21) erzeugt einen Durchflussschätzwert, der die Geschwindigkeit ausdrückt, mit der das Wasser die zentrale Heizleitung (12) durchläuft, relativ zu dem Signal, mit dem sich das Flügelrad dreht. Die Prozessoreinheit (21) ermöglicht, dass der Durchflussschätzwert in der Benutzerschnittstelle (52) des mobilen Endgeräts (50) angezeigt wird. In einer möglichen Ausführungsform ermöglicht die Steuervorrichtung (20), dass die Berechnung der Wärmeabgabe von mindestens einem Heizkörper (30) auf der Grundlage des Durchflussschätzwerts in der Benutzerschnittstelle (52) angezeigt wird. Dies kann sowohl durch die Prozessoreinheit (21) als auch durch Ausführen der Software erfolgen, die vom mobilen Endgerät (50) betrieben wird.

In einer möglichen Ausführungsform greift die Steuervorrichtung (20) auf einen Speicher zu, der die Parameter des Kühlers (30) in dem Gebäude oder der zu beheizenden Umgebung aufnimmt. Der Speicher ist eine Speichereinheit oder Datenspeichervorrichtung, die auf dem mobilen Endgerät (50) oder auf einem Server bereitgestellt ist.

In einer möglichen Ausführungsform kann dem Benutzer ermöglicht werden, die Heizkörperparameterwerte über die Benutzerschnittstelle (52) einzugeben.

In der ausführlichen Beschreibung hierin können die Heizkörperparameter die Anzahl der Heizkörper, der Heizkörper selbst (30), die Abmessungen der mit dem Heizkörper (30) verbundenen Komponenten, der Typ des Heizkörpers usw. sein.

In einer möglichen Ausführungsform berechnet die Steuervorrichtung (20) die Wärmeabgabe von mindestens einem Heizkörper (30) und gibt dem Benutzer über die Benutzerschnittstelle (52) eine Warnung aus, wenn die Wärmeabgabe von einem vorbestimmten Schwellenwert abweicht. Im Einzelnen kann die Benutzeroberfläche (52) Informationen so bereitstellen, dass mindestens ein Ventil (32) entsprechend der Größe der Abweichung geöffnet oder geschlossen werden kann, um eine hydraulische Stabilität zu gewährleisten.

Der Schutzumfang der Erfindung ist in den beigefügten Ansprüchen dargelegt und kann keineswegs auf die in der ausführlichen Beschreibung gegebenen Beispiele beschränkt werden. Es ist ersichtlich, dass ein Fachmann im Hinblick auf das Vorstehende ähnliche Ausführungsformen erstellen kann, ohne vom Hauptgegenstand der Erfindung abzuweichen.

### IN DER FIGUR VERWENDETE REFERENZNUMMERN

- 1: Warmwasserbereiter
- 10: Wasservolumen
- 12: Zentrale Heizleitung
- 14: Pumpe
- 16: Wärmequelle
- 20: Steuervorrichtung
- 21: Prozessoreinheit
- 22: Kommunikationsschnittstelle
- 23: Speichereinheit
- 30: Heizkörper
- 32: Ventil
- 50: Mobiles Endgerät
- 52: Benutzerschnittstelle

## Patentansprüche

1. Ein Wasservolumen (10), das so konfiguriert ist, dass es mit mindestens einem Heizkörper (30) über eine zentrale Heizleitung (12) hydraulisch verbunden ist; eine Wärmequelle (16) zum Erwärmen des Wassers in dem Wasservolumen (10); eine Pumpe (14) mit einem Flügelrad zum Pumpen von Wasser im Wasservolumen (10) aus der zentralen Heizleitung (12); einen Warmwasserbereiter (1) mit einer Steuervorrichtung (20), die zur Steuerung der Pumpe (14) konfiguriert ist; **dadurch *gekennzeichnet*, dass** er einen der Pumpe (14) zugeordneten Encoder umfasst, der ein Signal für die Anzahl der Umdrehungen pro Minute des Flügelrads erzeugt; wobei die Steuervorrichtung (20) konfiguriert ist, das Signal zu lesen und einen Durchflussschätzwert des durch die zentrale Heizleitung (12) fließenden Wassers gemäß dem Signal zu erzeugen.

2. Ein Warmwasserbereiter (1) nach Anspruch 1, der **dadurch *gekennzeichnet* ist, dass** der Encoder eine interne Komponente der Pumpe (14) ist.

3. Ein Warmwasserbereiter (1) nach Anspruch 2, der **dadurch *gekennzeichnet* ist, dass** das von dem Encoder erzeugte Signal ein Rechtecksignal ist.

4. Ein Warmwasserbereiter (1) nach Anspruch 1, der **dadurch *gekennzeichnet* ist, dass** die Steuervorrichtung (20) so konfiguriert ist, dass sie einen Wärmeabgabewert aus dem Durchflussschätzwert erhält.

5. Ein Warmwasserbereiter (1) nach Anspruch 4, der **dadurch *gekennzeichnet* ist, dass** die Steuervorrichtung (20) so konfiguriert ist, dass sie mindestens den Durchflussschätzwert und/oder den Wärmeabgabewert in einer Benutzerschnittstelle (52) anzeigt.

6. Ein Warmwasserbereiter (1) nach Anspruch 5, der **dadurch *gekennzeichnet* ist, dass** die Steuervorrichtung (20) eine drahtlose Kommunikationsschnittstelle (22) zum Übertragen von zumindest Durchflussschätzwert- und/oder Wärmeausgabewertinformationen an ein mobiles Endgerät (50) umfasst.

7. Ein Wasservolumen (10), das so konfiguriert ist, dass es mit mindestens einem Heizkörper (30) über eine zentrale Heizleitung (12) hydraulisch verbunden ist; eine Wärmequelle (16) zum Erwärmen des Wassers in dem Wasservolumen (10), eine Pumpe (14) mit einem Flügelrad zum Pumpen von Wasser im Wasservolumen (10) aus der zentralen Heizleitung (12); ein Verfahren zum hydraulischen Abgleich eines Heizungssystems mit einem Warmwasserbereiter (1), der eine Steuervorrichtung (20) umfasst, die zum Steuern der Pumpe (14) konfiguriert ist; **dadurch *gekennzeichnet*, dass** es folgende Schritte umfasst, welche von der Steuervorrichtung (20) durchgeführt werden:
- Zugriff auf einen Speicher, in dem die Parameter von mindestens einem Heizkörper (30) gespeichert sind,
- Lesen eines von der Pumpe (14) entnommenen Signals und Ausdrücken der Anzahl der Umdrehungen pro Minute des Flügelrads,
- Berechnen des Wertes der Wärmeabgabe von mindestens einem Heizkörper (30) gemäß der Flügelraddrehzahl und den Parameterwerten der Heizkörper (30).

8. Ein hydraulisches Abgleichverfahren nach Anspruch 7, das **dadurch *gekennzeichnet* ist, dass** ferner der von der Steuervorrichtung (20) berechnete Wärmeabgabewert in einer Benutzerschnittstelle (52) angezeigt wird.

9. Ein hydraulisches Abgleichverfahren nach Anspruch 7, das **dadurch *gekennzeichnet* ist, dass** die Steuervorrichtung (20) den Schritt zum Warnen des Benutzers umfasst, wenn die von der Steuervorrichtung berechnete Wärmeabgabe in einem vorbestimmten Umfang von einem vorbestimmten Wärmeabgabewert abweicht.

10. Ein hydraulisches Abgleichverfahren nach Anspruch 7, das **dadurch *gekennzeichnet* ist, dass** die Heizkörperparameter mindestens die Kühlerabmessungen oder die Anzahl der Heizkörper sind.
